# FASCICULE DE BREVET EUROPEEN

(11) **EP 1 593 816 B1**
(45) Date de publication et mention de la délivrance du brevet: **18.10.2006**
(21) Numéro de dépôt: 05290782.1
(22) Date de dépôt: 08.04.2005
(51) Int. Cl.: F01D 21/04, F01D 21/06

(54) **Turbomachine dotée d'un système de blocage d'un arbre principal de moteur à palier fusible**
Turbomaschine mit einem Blockiersystem für die Haupttriebwerkswelle mit Lager-Sollbruchstelle
Turbomachine provided with a blocking system for the main engine shaft with frangible bearing

(30) Priorité: 14.04.2004 FR 0403910
(43) Date de publication de la demande: 09.11.2005
(73) Titulaire: SNECMA, 75015 Paris (FR)
(72) Inventeur: Hugonie, Aymeric, 91360 Cheptainville (FR); Mons, Claude, 77176 Savigny le Temple (FR); Soupizon, Jean-Luc, 77000 Vaux le Penil (FR)
(74) Mandataire: Barbin le Bourhis, Joël

(56) Documents cités:
- EP-A- 1 126 137
- FR-A- 2 773 586

## Description

L'invention concerne une turbomachine qui comprend au moins un premier ensemble rotatif avec un premier arbre, un stator et un palier dit "fusible", solidaire du stator, pouvant supporter ledit arbre et susceptible de céder lorsqu'un balourd apparaît sur le premier ensemble rotatif. Cette turbomachine est destinée principalement à être utilisée dans le domaine de l'aviation, et plus particulièrement en tant que moteur d'avion.

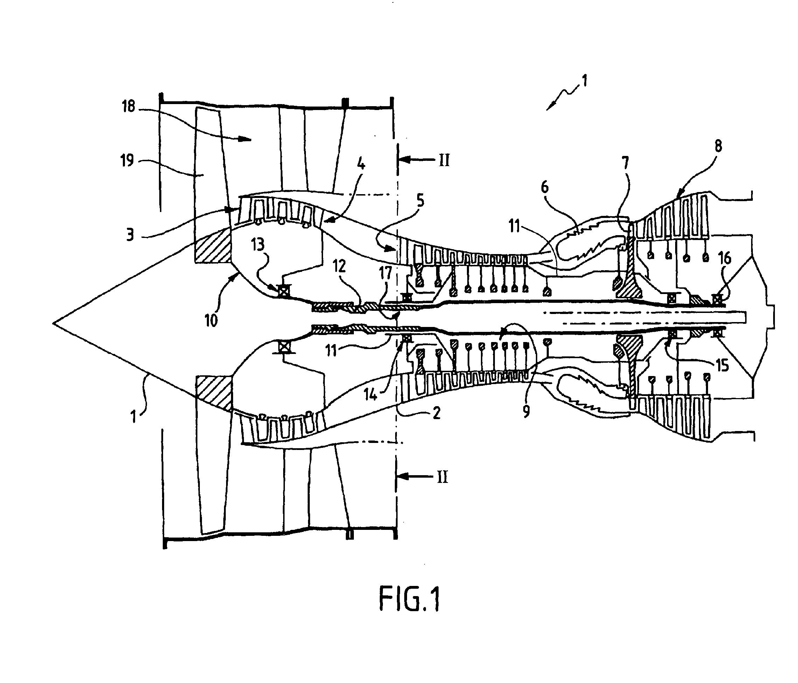

Un exemple de ce type de turbomachine est illustré sur la figure 1 qui représente un turboréacteur 1 d'avion de type bien connu. Ce turboréacteur 1 comprend un premier 10 et un deuxième ensemble rotatif 9 entourés par un stator 2, et séparés de ce dernier par une veine principale 3 de section annulaire. La veine principale 3 est occupée par des étages d'aubes alternativement solidaires desdits ensembles rotatifs 9 et 10 et du stator 2 pour accélérer et comprimer les gaz avant de bénéficier de l'énergie qu'ils libèrent en se détendant, après la combustion du carburant : on trouve ainsi d'avant en arrière, les aubes d'un compresseur à basse pression 4, les aubes d'un compresseur à haute pression 5, une chambre de combustion 6, les aubes d'une turbine à haute pression 7 et les aubes d'une turbine à basse pression 8. Le premier ensemble rotatif 10 comprend le rotor du compresseur à basse pression 4, le rotor de la turbine à basse pression 8, et un premier arbre 12 également appelé arbre "basse pression" ou arbre principal, assurant la liaison entre les deux rotors précités. Le deuxième ensemble rotatif 9 comprend le rotor du compresseur à haute pression 5, le rotor de turbine à haute pression 7 et un deuxième arbre 11, également appelé arbre "haute pression", assurant la liaison entre les deux rotors 5 et 7 précités. Le turboréacteur 1 comprenant deux ensembles rotatifs 9 et 10, ou corps, on parle généralement de turboréacteur double corps.

Les premier et deuxième arbres 12 et 11 sont concentriques et tournent à des vitesses différentes, la vitesse de rotation du premier arbre 12 étant inférieure à celle du deuxième arbre 11. Les deux arbres sont soutenus à l'aide de paliers liés au stator 2 : on trouve d'avant en arrière un palier avant 13 pour le premier arbre 12, un palier avant 14 pour le deuxième arbre 11, un palier arrière 15 pour le deuxième arbre 11 et un palier arrière 16 pour le premier arbre 12. Ces paliers comprennent comme élément actif un ou deux roulements à billes ou à rouleaux qui permettent aux arbres 11 et 12 de tourner à grande vitesse indépendamment l'un de l'autre. Les arbres 11 et 12 sont entièrement séparés l'un de l'autre, mais sur une zone de proximité 17 assez longue, située sensiblement au droit du palier avant 14 du deuxième arbre 11, ces arbres ne sont séparés que par un petit jeu.

Les turboréacteurs d'avion modernes ont un taux de compression élevé et un grand taux de dilution des gaz de combustion. Aussi, ils sont munis d'une veine auxiliaire 18 entourant la veine principale 3, parcourue par de l'air qui se mêle au gaz de combustion à l'arrière de la turbine à basse pression 8 (on parle ainsi de turboréacteurs double flux). L'air qui parcourt cette veine auxiliaire 18 est accéléré par les aubes d'une soufflante 19 solidaire du premier ensemble rotatif 10 et qui s'étend en avant du compresseur à basse pression 4. Les aubes de la soufflante 19 ont un très grand diamètre et une inertie conséquente. Elles sont en outre exposées à la rupture lorsque l'avion est en vol et qu'un corps étranger, comme un oiseau, percute ces dernières.

Dès qu'une aube de soufflante est rompue, un balourd important apparaît sur le premier ensemble rotatif 10, ce qui produit sur lui de très importants efforts de nature vibratoire qui sont transmis au deuxième ensemble rotatif 9 et au stator 2 par l'intermédiaire du palier avant 13. Les dommages produits par ces efforts excessifs sont susceptibles de se propager dans tout le turboréacteur 1. C'est pourquoi il est connu d'avoir recours à un palier avant 13 dit "fusible", c'est-à-dire susceptible de se casser ou de céder d'une autre manière lorsqu'un balourd apparaît sur le premier ensemble rotatif 10.

Ce type de palier 13 comprend en général une amorce de rupture à proximité du premier arbre 12, il s'agit en général d'une portion de structure de faible épaisseur qui le lie au stator 2 ou de boulons de liaison de petit diamètre et dont la tige filetée peut être entaillée ; un exemple de ce type de palier est décrit dans le brevet US 5,417,501. L'amorce de rupture est calculée pour se déchirer ou se rompre quand le balourd apparaît, de sorte que le palier avant 13 se détache du stator 2 et cesse de soutenir le premier arbre 12 qui devient alors libre d'osciller en basculant autour du palier arrière 16 sans plus produire d'effort excessif sur le stator 2.

Le pilote d'avion face à un problème de ce genre arrête le turboréacteur concerné (c'est-à-dire coupe l'alimentation en carburant de ce turboréacteur), ce qui permet de ne plus entraîner les arbres 11 et 12 en rotation de sorte que leur vitesse de rotation décroît. Ensuite, le pilote cherche à atterrir sur le site s'atterrissage le plus proche, l'avion se maintenant en vol jusqu'à l'atterrissage grâce à son ou à ses autres turboréacteurs, non-endommagés. Durant cette phase de vol, tandis que le deuxième arbre 11 s'arrête progressivement de tourner, la soufflante 19 entraînée par l'air qui la traverse continue de tourner lentement (par rapport à sa vitesse de rotation normale) et entraîne le premier arbre 12 en rotation; on parle d'auto-rotation du premier ensemble rotatif 10 et de l'arbre 12.

Or, cette auto-rotation crée des vibrations qui se propagent dans l'ensemble de l'appareil de façon perceptible pour les passagers de l'appareil. On notera que l'amplitude de ces vibrations est d'autant plus importante que la fréquence d'auto-rotation est égale ou proche de la fréquence de résonance de la soufflante.

Pour éviter cet inconvénient, une solution connue, décrite dans le document EP 1 126 137 A2, consiste à équiper chaque turboréacteur d'un système de freinage constitué d'un tambour de freinage solidaire du rotor du compresseur à basse pression et d'un support cylindrique solidaire du stator sur lequel sont montés plusieurs patins de frein. Ces patins sont susceptibles de passer d'une première position, dans laquelle ils ne touchent pas le tambour, à une deuxième position dans laquelle ils frottent contre ce tambour pour le freiner, voire l'empêcher de tourner, selon l'intensité des frottements.

Ce système de freinage connu présente néanmoins l'inconvénient d'être composé de nombreuses pièces (boulons, patins...), ce qui rend sa fabrication complexe et onéreuse et son installation délicate. D'autre part, en raison de l'espace qu'occupe un tel système, on ne peut l'installer qu'à l'avant du turboréacteur, sous les aubes du compresseur basse pression.

La présente invention vise à supprimer les vibrations causées par l'auto-rotation de la soufflante au moyen d'un système efficace de structure simple.

Pour atteindre ce but, l'invention a pour objet une turbomachine comprenant au moins un premier ensemble rotatif avec un premier arbre, un stator et des paliers solidaires du stator pouvant supporter le premier arbre, un desdits paliers étant susceptible de céder lorsqu'un balourd apparaît sur le premier ensemble rotatif, caractérisée en ce qu'elle comprend des moyens de freinage pour freiner le premier arbre lorsque le balourd apparaît et des moyens de soudage pour souder, en fin de freinage, une partie du premier arbre à une partie environnante de la turbomachine au contact de laquelle la partie du premier arbre est susceptible de venir lorsque ledit balourd est apparu.

Le fait de souder entre elles lesdites parties assure un meilleur blocage du premier arbre que celui obtenu avec les systèmes du type de celui précédemment décrit où le blocage du premier arbre dépend de l'intensité des frottements exercés par les patins sur le tambour. En effet, lorsque cette intensité est insuffisante le premier arbre est freiné mais n'est pas bloqué, de sorte qu'un phénomène de vibration peut subsister.

De manière avantageuse, lesdits moyens de soudage comprennent un anneau situé entre ladite partie du premier arbre et ladite partie environnante de la turbomachine et cet anneau est solidaire de l'une de ces deux parties et comprend une composition fusible susceptible de s'échauffer par friction avec la partie d'arbre ou la partie environnante et de fondre suite à cet échauffement.

Avantageusement, ladite composition fusible comprend majoritairement de l'aluminium, cet élément ayant un point de fusion suffisamment bas et permettant d'obtenir de bonnes soudures.

En outre, selon un mode particulier de l'invention, l'anneau est obtenu par projection thermique. La projection thermique est une technique bien appropriée dans le cas présent car elle est permet de réaliser facilement ledit anneau et d'obtenir une bonne adhérence de cet anneau sur le substrat sur lequel il est déposé, c'est à dire ladite partie du premier arbre ou ladite partie environnante. En outre, cette technique peut être utilisée quelle que soit la géométrie du substrat (cylindrique, tronconique...).

De manière avantageuse, pour faciliter l'échauffement de la composition fusible, la surface de ladite partie du premier arbre, dans le cas ou l'anneau est monté sur ladite partie environnante, ou la surface de la partie environnante de la turbomachine, dans le cas ou l'anneau est monté sur la partie du premier arbre, est irrégulière.

En effet, dans ce cas, la zone de friction se limite à l'interface entre les sommets des aspérités de ladite surface et ledit anneau. L'étendue de cette zone de friction étant limitée, la température y augmente très rapidement, ce qui favorise la fusion de ladite composition. On notera que le contact entre ladite surface et ledit anneau est généralement un contact satellitaire.

Il convient de noter que la turbomachine de l'invention peut comprendre un ou plusieurs ensembles rotatifs. Lorsque la turbomachine comprend un unique ensemble rotatif, les moyens de soudage sont disposés entre une partie du premier arbre et une partie environnante appartenant au stator de la turbomachine, de sorte que ladite partie du premier arbre est susceptible d'être soudée au stator. Par contre, lorsque la turbomachine comprend plusieurs ensembles rotatifs, ladite partie environnante peut appartenir au stator ou à l'un de ces ensembles rotatifs (autres que le premier ensemble).

Avantageusement, la turbomachine de l'invention est un moteur d'avion, et plus particulièrement un turboréacteur. D'après la remarque précédente, on comprend que ce turboréacteur peut être monocorps, double corps ou triple corps. Dans le cas particulier d'un turboréacteur double corps, analogue à celui représenté sur la figure 1, la turbomachine comprend un deuxième ensemble rotatif avec un deuxième arbre, les premier et deuxième arbres concentriques étant susceptibles de tourner à des vitesses différentes, le premier arbre tournant moins vite que le deuxième. Dans ce type de turbomachine, ladite partie environnante appartient de préférence au deuxième arbre.

La turbomachine selon l'invention comprend également des moyens de freinage pour freiner suffisamment le premier arbre avant la fusion de la composition fusible, ce qui permet à la composition fusible de se solidifier pour former la soudure souhaitée. En l'absence de tels moyens de freinage, la composition fusible fondrait et la rotation trop rapide du premier arbre disperserait la composition fondue à l'intérieur de la turbomachine.

On notera qu'en règle générale, suite à l'apparition du balourd et à la rupture du palier fusible, les aubes du compresseur basse pression entrent au contact du stator, ce qui crée des frottements qui participent au freinage du premier arbre.

Avantageusement, lesdits moyens de freinage comprennent un revêtement recouvrant un tronçon du premier arbre, ce revêtement étant susceptible de venir frotter contre une zone voisine de la turbomachine lorsque ledit balourd apparaît. Ladite zone voisine peut appartenir au stator de la turbomachine ou à un ensemble rotatif différent du premier ensemble, dans le cas d'un turboréacteur double corps ou triple corps.

En même temps qu'il freine le tronçon du premier arbre, ce revêtement permet de protéger ce tronçon de tout contact direct avec la zone voisine de la turbomachine.

Selon un mode de réalisation particulier dudit revêtement, ce dernier comprend une couche de fibres imprégnée de résine. Le revêtement est ainsi simple à réaliser et facile à mettre en place.

Avantageusement, on choisit des résines qui présente une faible conductivité thermique, une bonne tenue en température, et de bonnes propriétés mécaniques comme les résines époxydes, les résines bismaléimides, et les résines phénoliques. La teneur en température de la résine doit en particulier être choisie en fonction des conditions normales de fonctionnement du premier arbre, c'est-à-dire en dehors de tout contact : lorsque la température de fonctionnement de l'arbre n'excède pas 120°, on peut utiliser des résines époxydes, au-delà on préférera les résines bismaléimides et surtout les résines phénoliques.

La couche de fibres permet de renforcer la tenue mécanique du revêtement lorsqu'il vient au contact de la zone voisine de la turbomachine. Cette couche est soit préimprégnée de résine et enroulée autour du premier arbre, soit déjà enroulée et ensuite imprégnée de résine. Ladite couche peut être enroulée plusieurs fois autour de l'arbre de manière à ajuster l'épaisseur du revêtement et/ou à renforcer sa résistance mécanique.

Selon un mode de réalisation particulier du revêtement, la couche de fibres est formée par un manchon de fibres apte à être enfilé sur le premier arbre. Cette forme et cette aptitude particulières facilitent la mise en place de cette couche. Avantageusement, pour ajuster l'épaisseur du revêtement et/ou renforcer sa résistance mécanique, il est possible d'enfiler plusieurs manchons sur le premier arbre et de les superposer.

L'invention sera mieux comprise et ses avantages apparaîtront clairement à la lecture de la description détaillée qui suit, d'un mode de réalisation de l'invention représenté à titre d'exemple non-limitatif. La description se réfère aux dessins annexés sur lesquels:
- la figure 1 est une coupe d'un turboréacteur d'avion de type connu;
- la figure 2 est une vue en coupe, selon le plan II-II de la figure 1, des deux arbres du turboréacteur de la figure 1 lorsque le premier arbre est libre d'osciller;
- la figure 3 est une coupe schématique d'une partie de turbomachine selon l'invention sur laquelle sont représentés les moyens de freinage et les moyens de soudage selon l'invention;
- la figure 4 est une vue agrandie de la zone IV de la figure III, sur laquelle les moyens de freinage sont représentés avec des arrachements.

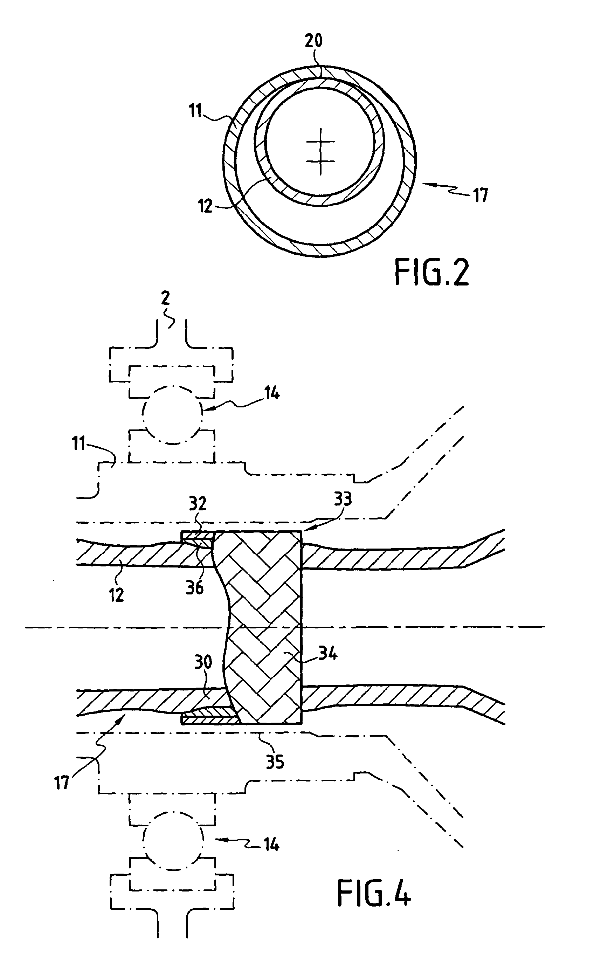

La figure 1, précédemment décrite, représente un turboréacteur d'avion double corps double flux de type bien connu. On remarquera la zone de proximité 17, dans laquelle le premier arbre 12 et le deuxième arbre 11 sont très proches. C'est dans cette zone que les deux arbres 12 et 11 viennent au contact l'un de l'autre lorsque le palier fusible 13 cède suite à la rupture d'une pale de la soufflante 19, comme représenté figure 2. Après que le palier fusible 13 a cédé, le premier arbre 12 du turboréacteur, libre d'osciller en basculant autour du palier arrière 16, frotte contre le deuxième arbre 11 dans la zone de contact 20.

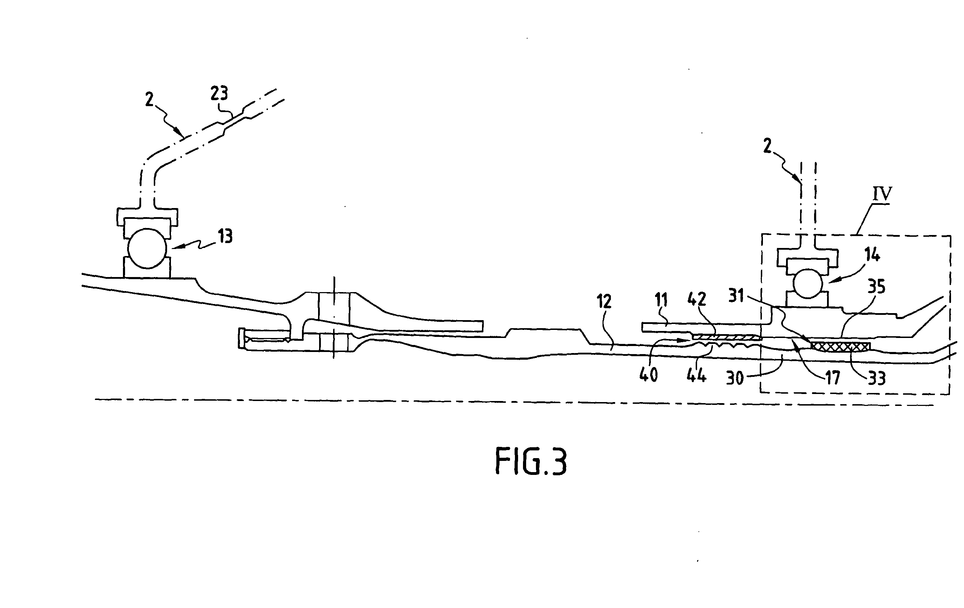

La turbomachine selon l'invention représentée partiellement sur la figures 3 est un turboréacteur d'avion double corps double flux, analogue à celui précédemment décrit et représenté figure 1. Pour cette raison, les mêmes références numériques sont utilisées pour désigner les éléments communs à l'invention et à l'art antérieur.

La figure 3 ne représente que la partie de turbomachine située au voisinage de la zone de proximité 17. Sur cette figure, on voit que le premier arbre 12 "basse pression", est retenu par un palier avant fusible 13 solidaire du stator 2 et susceptible de se rompre au niveau des zones de fragilisation 23. Autour du premier arbre 12 se situe le deuxième arbre 11 (ces deux arbres sont concentriques) retenu par le palier avant 14 solidaire du stator 2. Ces deux arbres sont particulièrement proches l'un de l'autre dans la zone de proximité 17. Le tronçon 30 du premier arbre 12 situé dans cette zone 17 est entouré de chaque côté par des parties du premier arbre qui présentent des diamètres extérieurs supérieurs au diamètre dudit tronçon 30.

Comme représenté sur la figure 3, le tronçon 30 est recouvert par les moyens de freinage 31 et les moyens de soudage 40 selon l'invention. Ces moyens 31, 40 sont séparés l'un de l'autre et les moyens de freinage sont situés en arrière des moyens de soudage (l'avant et l'arrière étant définis par rapport au sens de circulation de l'air, l'air entrant à l'avant et sortant à l'arrière de la turbomachine).

Comme représenté dans l'exemple de la figure 4, les moyens de freinage 31 comprennent un revêtement composite 33 comprenant un manchon 32 de fibres 34 tressées, orientées de manière à renforcer la résistance mécanique du revêtement et imprégnées de résine phénolique. Cette résine peut contenir des lubrifiants secs tels que le graphite, le bisulfure de molybdène, le nitrure de bore ou tout autre lubrifiant sec connu. Les fibres 34 sont en fait des torons de fibres de carbone, d'aramide ou de verre et ont été tressées de manière à assurer une certaine déformabilité du manchon 32, dans le but de faciliter la mise en place de ce dernier. Ainsi, lorsqu'on enfile le manchon 32 sur l'arbre 12, on l'étire radialement pour augmenter son diamètre et passer les parties de l'arbre de plus grand diamètre que celui du tronçon 30, ce qui permet de positionner facilement ce manchon au niveau du tronçon 30. Une fois correctement positionné, on étire le manchon 32 axialement pour diminuer son diamètre et le plaquer autour dudit tronçon 30. Pour faciliter encore sa mise en place, le manchon 32 peut présenter une certaine élasticité qui lui permette de se plaquer de lui même autour dudit tronçon. Cette élasticité peut être obtenue par le tressage des fibres 34 et le taux de fibre utilisé. Après avoir été mis en place sur l'arbre 12, le manchon 32 est imprégné de résine.

Le revêtement composite 33 vise à freiner le premier arbre 12, en même temps qu'il le protège d'un contact direct avec la zone voisine 35 du turboréacteur formée ici par un tronçon du deuxième arbre 11 et située en face dudit revêtement 33.

Avantageusement, le coefficient de frottement entre la résine phénolique utilisée pour le revêtement 33 et la zone voisine 35 du turboréacteur est suffisamment faible pour limiter l'échauffement du premier arbre 12 et ne pas le fragiliser. En effet, on a constaté qu'il convenait de limiter l'échauffement lié aux frottements entre le revêtement 33 et ladite zone voisine 35, car cet échauffement altère les propriétés mécaniques du premier arbre 12, en particulier sa résistance à la rupture et sa tenue à la fatigue. En règle générale, lorsque le deuxième arbre 11 est réalisé en alliage de titane ledit coefficient de frottement est compris entre 0.1 et 0.6. Par exemple, pour une résine phénolique, ce coefficient de frottement est de l'ordre de 0.3.

Avantageusement, les moyens de freinage 31 comprennent également une première couche intermédiaire 36 réalisée dans un matériau différent du revêtement 33 et disposée entre le revêtement composite tissu/résine et le premier arbre 12. Cette couche intermédiaire 36 est réalisée par exemple en graphite. Le coefficient de frottement entre cette couche intermédiaire 36 et le deuxième arbre 11 est plus élevé que celui entre le revêtement 33 et l'arbre 11 de manière à freiner plus significativement le premier arbre 12. Par exemple, ce coefficient de frottement est compris entre 0.6 et 0.9. La couche intermédiaire 36 est destinée à entrer en contact avec le deuxième arbre 11 lorsque le revêtement composite 33 est usé.

L'usure du revêtement 33 est plus ou moins importante en fonction des matériaux utilisés, de la différence entre les vitesses de rotation du premier et du deuxième arbre, et des températures dans la zone 17. On choisit la résistance mécanique et l'épaisseur du revêtement 33 telles que le contact entre la première couche intermédiaire 36 et le deuxième arbre 11 s'établisse lorsque la vitesse de rotation du premier arbre 12 a suffisamment diminué, de manière à limiter l'échauffement lié aux frottements.

Selon un mode particulier de réalisation de l'invention, on peut disposer entre la première couche intermédiaire 36 et le premier arbre 12 une deuxième couche intermédiaire, non représentée. Cette couche vise à éviter qu'un phénomène de corrosion galvanique ne s'établisse entre l'arbre 12 réalisé, par exemple, en acier maraging ou en acier haute résistance et la première couche 36. Avantageusement, ladite couche est une couche de peinture époxyphénolique ou une peinture à pigment aluminium.

Les moyens de soudage 40, quant à eux, comprennent un anneau 42 en aluminium, solidaire d'une partie environnante de la turbomachine, ici le deuxième arbre 11. Cet anneau est déposé sur le deuxième arbre 11 par projection thermique.

Par ailleurs des nervures sont ménagées sur la portion 44 du premier arbre 12 située en face de l'anneau 42. Ces nervures sont orientées parallèles ou inclinées par rapport à la direction tangente au premier arbre 12, de manière à accroître les surfaces de contact en tenant compte des déplacements relatifs entre le premier arbre 12 et l'anneau 42.

Lorsqu'une pale de la soufflante de la turbomachine selon l'invention se casse, un balourd apparaît sur l'ensemble rotatif 10 et les paliers "fusibles" 13 cèdent. Le premier arbre 12 oscille alors autour du pallier arrière 16 et s'excentre de sorte que les moyens de freinage 31 viennent frotter contre la zone voisine 35 du deuxième arbre 11. Ces moyens de freinage s'usent au fur et à mesure qu'ils ralentissent le premier arbre 12. L'épaisseur des moyens de freinage 31 et la distance séparant ces moyens 31 des moyens de soudage 40 sont choisies telles qu'une fois la vitesse de rotation du premier arbre 12 suffisamment diminuée, l'anneau 42 vienne frotter contre les nervures de la portion 44 du premier arbre 12 et s'échauffe. Cet échauffement provoque la fusion de cet anneau 42, ce qui permet de souder entre eux le premier 12 et le deuxième arbre 11.

Selon un autre mode de réalisation de l'invention, non représenté, les moyens de freinage 31 et les moyens de soudage 40 sont solidaires du premier arbre 12, les moyens de freinage 31 étant superposés avec les moyens de soudage 40 sur un même tronçon du premier arbre 12. Bien entendu, il est également possible que les moyens de freinage 31 et les moyens de soudage 40 soient solidaires du deuxième arbre 11 et superposés. Dans tous les cas, les moyens de freinage 31 couvrent les moyens de soudage 40. Ainsi, les moyens de soudage 40 sont situés entre les moyens de freinage et l'arbre concerné, de manière à n'entrer au contact de l'autre arbre qu'une fois les moyens de freinage 31 usés.

## Revendications

1. Turbomachine comprenant au moins un premier ensemble rotatif (10) avec un premier arbre (12), un stator (2) et des paliers (13, 14, 15, 16) solidaires du stator pouvant supporter le premier arbre, un desdits paliers (13) étant susceptible de céder lorsqu'un balourd apparaît sur le premier ensemble rotatif (10), **caractérisée en ce qu**'elle comprend des moyens de freinage (31) pour freiner le premier arbre (12) lorsque le balourd apparaît et des moyens de soudage (40) pour souder, en fin de freinage, une partie du premier arbre (12) à une partie environnante de la turbomachine.

2. Turbomachine selon la revendication 1, **caractérisée en ce que** lesdits moyens de soudage (40) comprennent un anneau (42) situé entre ladite partie du premier arbre (12) et ladite partie environnante de la turbomachine, et **en ce que** ledit anneau (42) est solidaire de l'une de ces deux parties et comprend une composition fusible susceptible de s'échauffer par friction avec la partie d'arbre ou la partie environnante et de fondre.

3. Turbomachine selon la revendication 1 ou 2, **caractérisée en ce que** la surface de ladite partie du premier arbre (12) ou de ladite partie environnante de la turbomachine, est irrégulière.

4. Turbomachine selon la revendication 1 à 3, **caractérisée en ce qu**'elle comprend un deuxième ensemble rotatif (9) avec un deuxième arbre (11), le premier et le deuxième arbre étant concentriques et susceptibles de tourner à des vitesses différentes, ladite partie environnante de la turbomachine appartenant au deuxième arbre (11) de sorte que ladite partie du premier arbre (12) est susceptible d'être soudée au deuxième arbre.

5. Turbomachine selon la revendication 1 à 3, **caractérisée en ce que** ladite partie environnante de la turbomachine appartient au stator (2), de sorte que ladite partie du premier arbre (12) est susceptible d'être soudée au stator (2).

6. Turbomachine selon la revendication 2 et l'une quelconque des revendications 3 à 5, **caractérisée en ce que** ladite composition fusible comprend majoritairement de l'aluminium.

7. Turbomachine selon la revendication 2 et l'une quelconque des revendications 3 à 6, **caractérisée en ce que** ledit anneau (42) est obtenu par projection thermique.

8. Turbomachine selon l'une quelconque des revendications 1 à 7, **caractérisée en ce que** les moyens de freinage (31) comprennent un revêtement (33) recouvrant un tronçon (30) du premier arbre, ce revêtement (33) étant susceptible de venir frotter contre une zone voisine (35) de la turbomachine lorsque ledit balourd apparaît.

9. Turbomachine selon la revendication 8, **caractérisée en ce que** ledit revêtement (33) comprend une couche (32) de fibres (34) imprégnée de résine.

10. Turbomachine selon la revendication 8 ou 9, **caractérisée en ce que** ledit revêtement (33) comprend des fibres (34) choisies parmi les fibres de renfort suivantes : fibres de carbone, fibres d'aramide, fibres de verre, et une résine choisie parmi les résines suivantes : résine époxyde, résine bismaléimide et résine phénolique.

11. Turbomachine selon l'une quelconque des revendications 1 à 10, **caractérisée en ce que** les moyens de freinage (31) et les moyens de soudage (40) sont séparés l'un de l'autre, les moyens de freinage (31) étant situés en arrière des moyens de soudage (40).

12. Turbomachine selon l'une quelconque des revendications 1 à 10, **caractérisée en ce que** les moyens de freinage (31) et les moyens de soudage (40) sont superposés l'un avec l'autre, les moyens de freinage (31) couvrant les moyens de soudage (40).

13. Turbomachine selon l'une quelconque des revendications 1 à 12, **caractérisée en ce que** cette turbomachine est un turboréacteur d'avion.

## Claims

1. A turbomachine comprising at least a first rotary assembly (10) with a first shaft (12), a stator (2), and bearings (13, 14, 15, 16) secured to the stator and suitable for supporting the first shaft, one of said bearings (13) being capable of giving way when an unbalance occurs in the first rotary assembly (10), the turbomachine being **characterised in that** it further comprises brake means (31) for braking the first shaft (12) when the unbalance occurs, and bond means (40) acting at the end of braking to bond a portion of the first shaft (12) to a surrounding portion of the turbomachine.

2. A turbomachine according to claim 1, **characterised in that** said bond means (40) comprise a ring (42) situated between said portion of the first shaft (12) and said surrounding portion of the turbomachine, and **in that** said ring (42) is secured to one of said two portions and comprises a fusible composition capable of becoming heated by friction with the shaft portion or the surrounding portion, and of melting.

3. A turbomachine according to claim 1 or claim 2, **characterised in that** the surface of said portion of the first shaft (12) and of said surrounding portion of the turbomachine is uneven.

4. A turbomachine according to claim 1 to 3, **characterised in that** it comprises a second rotary assembly (9) with a second shaft (11), the first and the second shafts being coaxial and capable of rotating at different speeds, said surrounding portion of the turbomachine belonging to the second shaft (11) so that said portion of the first shaft (12) is capable of being bonded to the second shaft.

5. A turbomachine according to claim 1 to 3, **characterised in that** said surrounding portion of the turbomachine belongs to the stator (2) so that said portion of the first shaft (12) is capable of being bonded to the stator (2).

6. A turbomachine according to claim 2 and any one of claims 3 to 5, **characterised in that** said fusible composition mainly comprises aluminum.

7. A turbomachine according to claim 2 and any one of claims 3 to 6, **characterised in that** said ring (42) is obtained by thermal spraying.

8. A turbomachine according to any one of claims 1 to 7, **characterised in that** the brake means (31) comprise a covering (33) covering a segment (30) of the first shaft, the covering (33) being capable of coming to rub against an adjacent zone (35) of the turbomachine when said unbalance occurs.

9. A turbomachine according to claim 8, **characterised in that** said covering (33) comprises a layer (32) of fibers impregnated with resin.

10. A turbomachine according to claim 8 or claim 9, **characterised in that** said covering (33) comprises fibers (34) selected from the following reinforcement fibers: carbon fibers, aramid fibers, and glass fibers; and a resin selected from the following resins: epoxy resin, bismaleimide resin, and phenolic resin.

11. A turbomachine according to any one of claims 1 to 10, **characterised in that** the brake means (31) and the bond means (40) are spaced apart, the brake means (31) being situated behind the bond means (40).

12. A turbomachine according to any one of claims 1 to 10, **characterised in that** the brake means (31) and the bond means (40) are superposed on each other, the brake means (31) covering the bond means (40).

13. A turbomachine according to any one of claims 1 to 12, **characterised in that** the turbomachine is an airplane turbojet.

## Patentansprüche

1. Turbomaschine umfassend wenigstens eine erste drehbare Anordnung (10) mit einer ersten Welle (12), einem Stator (2) und Lagern (13, 14, 15, 16), die mit dem Stator fest verbunden sind und die in der Lage sind, die erste Welle zu tragen, wobei ein Lager (13) geeignet ist, nachzugeben, wenn eine Unwucht an der ersten drehbaren Anordnung (10) auftritt, **dadurch gekennzeichnet, daß** sie Bremsmittel (31) umfaßt, um die erste Welle (12) zu bremsen, wenn die Unwucht auftritt und Schweißmittel (40), um infolge einer Bremsung einen Abschnitt der ersten Welle (12) mit einem die Turbomaschine umgebenden Abschnitt zu verschweißen.

2. Turbomaschine nach Anspruch 1, **dadurch gekennzeichnet, daß** die Schweißmittel (40) einen Ring (42) umfassen, der zwischen der ersten Welle (12) und dem die Turbomaschine umgebenden Abschnitt liegt, und daß der Ring (42) mit einem dieser beiden Abschnitte fest verbunden ist und eine schmelzbare Zusammensetzung umfaßt, die in der Lage ist, sich durch Reibung mit dem Abschnitt der Welle oder mit dem die Turbomaschine umgebenden Abschnitt zu erhitzen und zu schmelzen.

3. Turbomaschine nach Anspruch 1 oder 2, **dadurch gekennzeichnet, daß** die Oberfläche des Abschnitts der ersten Welle (12) oder des die Turbomaschine umgebenden Abschnitts unregelmäßig ist.

4. Turbomaschine nach Anspruch 1 bis 3, **dadurch gekennzeichnet, daß** sie eine zweite drehbare Anordnung (9) mit einer zweiten Welle (11) umfaßt, wobei die erste und zweite Welle konzentrisch und in der Lage sind, sich mit unterschiedlichen Geschwindigkeiten zu drehen, wobei der die Turbomaschine umgebende Abschnitt zur zweiten Welle (11) derart gehört, daß der Abschnitt der ersten Welle (12) in der Lage ist, mit der zweiten Welle verschweißt zu werden.

5. Turbomaschine nach Anspruch 1 bis 3, **dadurch gekennzeichnet, daß** der die Turbomaschine umgebende Abschnitt zum Stator (2) derart gehört, daß der Abschnitt der ersten Welle (12) in der Lage ist, mit dem Stator (2) verschweißt zu werden.

6. Turbomaschine nach Anspruch 2 und einem der Ansprüche 3 bis 5, **dadurch gekennzeichnet, daß** die schmelzbare Zusammensetzung mehrheitlich aus Aluminium besteht.

7. Turbomaschine nach Anspruch 2 und einem der Ansprüche 3 bis 5, **dadurch gekennzeichnet, daß** der Ring (42) durch thermische Projektion erhalten ist.

8. Turbomaschine nach einem der Ansprüche 1 bis 7, **dadurch gekennzeichnet, daß** die Bremsmittel (31) einen Überzug (33) umfassen, der einen Abschnitt (30) der ersten Welle überdeckt, wobei der Überzug (33) in der Lage ist, gegen einen der Turbomaschine benachbarten Bereich (35) zu reiben, wenn die Unwucht auftritt.

9. Turbomaschine nach Anspruch 8, **dadurch gekennzeichnet, daß** der Überzug (33) eine Schicht (32) aus Fasern (34) umfaßt, die mit einem Harz imprägniert ist.

10. Turbomaschine nach Anspruch 8 oder 9, **dadurch gekennzeichnet, daß** der Überzug (33) Fasern (34), die unter den folgenden Verstärkungsfasern ausgewählt sind: Kohlefasern, Aramidfasern und Glasfasern, und ein Harz umfaßt, das unter den folgenden Harzen ausgewählt ist: Epoxydharzen, Bismaleimidharzen und Phenolharzen.

11. Turbomaschine nach einem der Ansprüche 1 bis 10, **dadurch gekennzeichnet, daß** die Bremsmittel (31) und die Schweißmittel (40) getrennt voneinander sind, wobei die Bremsmittel (31) hinter den Schweißmitteln (40) angeordnet sind.

12. Turbomaschine nach einem der Ansprüche 1 bis 10, **dadurch gekennzeichnet, daß** die Bremsmittel (31) und die Schweißmittel (40) übergelagert sind, wobei die Bremsmittel (31) die Schweißmittel (40) überdecken.

13. Turbomaschine nach einem der Ansprüche 1 bis 12, **dadurch gekennzeichnet, daß** diese Turbomaschine ein Turboreaktor eines Flugzeuges ist.
